# EUROPEAN PATENT SPECIFICATION

(11) **EP 3 970 993 B1**
(45) Date of publication and mention of the grant of the patent: **07.06.2023**
(21) Application number: 21197491.0
(22) Date of filing: 17.09.2021
(51) Int. Cl.: B60C 11/04, B60C 11/13, B60C 11/12, B60C 11/03

(54) **TIRE TREAD AND TIRE COMPRISING A STABILIZER STRUCTURE**
REIFENLAUFFLÄCHE UND REIFEN MIT EINER STABILISATORSTRUKTUR
BANDE DE ROULEMENT DE PNEU ET PNEU COMPRENANT UNE STRUCTURE DE STABILISATEUR

(30) Priority: 22.09.2020 US 202017027739
(43) Date of publication of application: 23.03.2022
(73) Proprietor: The Goodyear Tire & Rubber Company, Akron, OH 44316 (US)
(72) Inventor: PASSANTE SPACCAPIETRA, Ettore, L-9070 Ettelbruck (LU); MULLER, Philippe Joseph Auguste, B-6971 Champlon (BE); COCCON, Marco Nicolo, L-2230 Luxembourg (LU); BORTOLET, Lionel Jean-Marie, F-54730 Gorcy (FR)
(74) Representative: Kutsch, Bernd

(56) References cited:
- EP-A1- 2 722 199
- WO-A1-2019/058084
- CN-A- 110 091 678
- GB-A- 2 038 729
- US-A1- 2016 272 012

## Description

### Field of Invention

The present invention relates to a tire, preferably a pneumatic tire, and more specifically, to a tread for a tire or pneumatic tire.

### Background of the Invention

A construction may be adopted in conventional pneumatic tires in which, when a cross-section is viewed from a tire meridian direction, a contact patch of a shoulder rib arches and forms a convex on an inner side of a tire radial direction. Due to this construction, contact pressure of the tire may be distributed evenly over a center region and a shoulder region of a tread portion and uneven wear of the tire may be suppressed.

A stabilizer structure for a tread of a tire is known from US 2019/0168546.

A tread in accordance with the preamble of claim 1 is known from GB 2 038 729 A.

### Summary of the Invention

The invention relates to a tread in accordance with claim 1 and to a tire in accordance with claim 14.

Dependent claims refer to preferred embodiments of the invention.

In one embodiment in accordance with the invention, the subgroove or slit having the stabilizing structure for increasing tread stiffness is axially offset towards the equatorial plane of the tread.

In an alternative embodiment in accordance with the invention, the subgroove or slit having the stabilizing structure for increasing tread stiffness is axially offset away from the equatorial plane of the tread.

In a preferred aspect of the invention, the tread or tire respectively may comprise a plurality of circumferential grooves such as two, three, four or five circumferential grooves. In this case, only one, only two, or all of said circumferential grooves may be a circumferential groove having such a stabilizing structure for increasing tread stiffness comprising a circumferentially extending subgroove or slit in a radially innermost bottom of the circumferential groove, the subgroove or slit being axially offset from the centerline or center plane of the circumferential groove.

In a preferred aspect of the invention, only the two circumferential grooves closest to the tire shoulders, i. e. the axially outermost circumferential groove on either side of the equatorial plane, comprise such a stabilizing structure for increasing tread stiffness.

In an alternative preferred aspect of the invention, only the two circumferential grooves closest to the tire equatorial plane, i. e. the axially innermost circumferential groove on either side of the equatorial plane, comprise such a stabilizing structure for increasing tread stiffness.

In yet a further alternative preferred aspect of the invention, all circumferential grooves of the tire or tread comprise such a stabilizing structure for increasing tread stiffness.

In yet a further alternative preferred aspect of the invention, only the one circumferential groove that is located axially closest to the outboard side of the vehicle when the tire or tread is used on a vehicle in accordance with the tire's specification comprises such a stabilizing structure for increasing tread stiffness.

In yet a further alternative preferred aspect of the invention, only the one circumferential groove that is located axially closest to the inboard side of the vehicle when the tire or tread is used on a vehicle in accordance with the tire's specification comprises such a stabilizing structure for increasing tread stiffness.

A tread for a tire in accordance with a preferred embodiment of the present invention includes a first circumferential main groove, a second circumferential main groove, a third circumferential main groove, and a fourth circumferential main groove. The fourth main groove has a stabilizing structure for increasing tread stiffness. The stabilizing structure has a circumferentially extending subgroove in a radially innermost bottom of the fourth circumferential main groove. The subgroove is axially offset a predetermined amount from a centerline of the fourth circumferential main groove.

In a preferred aspect of the invention, the subgroove has a curved, cylindrical radially innermost surface for mitigating cracking and increasing axial flexibility of the stabilizing structures.

In a preferred aspect of the invention, an axial width of the subgroove shrinks to 0.0 mm under a predetermined operating condition.

In a preferred aspect of the invention, the subgroove has a first sidewall and a second sidewall interconnected by the curved, cylindrical radially innermost surface of the subgroove.

In a preferred aspect of the invention, the first sidewall abuts the second sidewall under the predetermined operating condition.

In a preferred aspect of the invention, relative motion between the first sidewall and the second sidewall is prevented by a wavy configuration of the first sidewall and a corresponding wavy configuration of the second sidewall.

A method in accordance with the present invention stiffens a tire tread. In a preferred aspect, the method comprises the steps of: extending a first circumferential main groove across the tire tread; extending a second circumferential main groove across the tire tread; circumferentially extending a subgroove across a radially innermost cylindrical bottom surface of the first main groove; axially offsetting the subgroove a predetermined amount from a centerline of the second circumferential main groove; and curving a radially innermost surface of the subgroove.

In a preferred aspect of the invention, the tire is a pneumatic truck tire.

### Definitions

"Asymmetric tread" means a tread that has a tread pattern not symmetrical about the centerplane or equatorial plane EP of the tire.

"Axial" and "axially" are used herein to refer to lines or directions that are parallel to the axis of rotation of the tire.

"Circumferential" means lines or directions extending along the perimeter of the surface of the annular tire parallel to the Equatorial Plane (EP) and perpendicular to the axial direction.

"Crown" means that portion of the tire within the width limits of the tire tread.

"Equatorial plane (EP)" means the plane perpendicular to the tire's axis of rotation and passing through the center of its tread; or the plane containing the circumferential centerline of the tread.

"Groove" means an elongated void area in a tread that may extend circumferentially or laterally about the tread in a straight, curved, or zigzag manner. Circumferentially and laterally extending grooves sometimes have common portions. The "groove width" is the tread surface occupied by a groove or groove portion divided by the length of such groove or groove portion; thus, the groove width may be its average width over its length. Grooves may be of varying depths in a tire. The depth of a groove may vary around the circumference of the tread, or the depth of one groove may be constant but vary from the depth of another groove in the tire. If such narrow or wide grooves are of substantially reduced depth as compared to wide circumferential grooves, which they interconnect, they may be regarded as forming "tie bars" tending to maintain a rib-like character in the tread region involved. As used herein, a groove is intended to have a width large enough to remain open in the tires contact patch or footprint.

"Inner" means toward the inside of the tire and "outer" means toward its exterior.

"Inboard side" means the side of the tire nearest the vehicle when the tire is mounted on a wheel and the wheel is mounted on the vehicle.

"Lateral" means an axial direction.

"Net-to-gross ratio" means the total area of ground contacting tread elements between lateral edges of the tread around the entire circumference of the tread divided by the gross area of the entire circumference of the tread between the lateral edges.

"Non-directional tread" means a tread that has no preferred direction of forward travel and is not required to be positioned on a vehicle in a specific wheel position or positions to ensure that the tread pattern is aligned with the preferred direction of travel. Conversely, a directional tread pattern has a preferred direction of travel requiring specific wheel positioning.

"Outboard side" means the side of the tire farthest away from the vehicle when the tire is mounted on a wheel and the wheel is mounted on the vehicle.

"Radial" and "radially" are used to mean directions radially toward or away from the axis of rotation of the tire.

"Rib" means a circumferentially extending strip of rubber on the tread which is defined by at least one circumferential groove and either a second such groove or a lateral edge, the strip being laterally undivided by full-depth grooves.

"Sipe" or "incision" means small slots molded into the tread elements of the tire that subdivide the tread surface and improve traction; sipes may be designed to close when within the contact patch or footprint, as distinguished from grooves.

"Tread" means a molded rubber component which, when bonded to a tire casing, includes that portion of the tire that comes into contact with the road when the tire is normally inflated and under normal load.

"Tread element" or "traction element" means a rib or a block element.

"Tread width" means the arc length of the tread surface in a plane including the axis of rotation of the tire.

### Brief Description of the Drawings

The present invention will be better understood through reference to the following description and the appended drawings, in which:
FIG. 1 is a schematic perspective view of a tire in accordance with the present invention;
FIG. 2 is a schematic orthogonal view of the tread of the tire of FIG. 1;
FIG. 3 is a schematic detail view of the tread of FIG. 2;
FIG. 4 is a schematic section view taken along the line "4-4" in FIG. 2; and
FIG. 5 is a detailed schematic view of part of the tread of FIG. 4.

### Detailed Description of Examples of the Present Invention

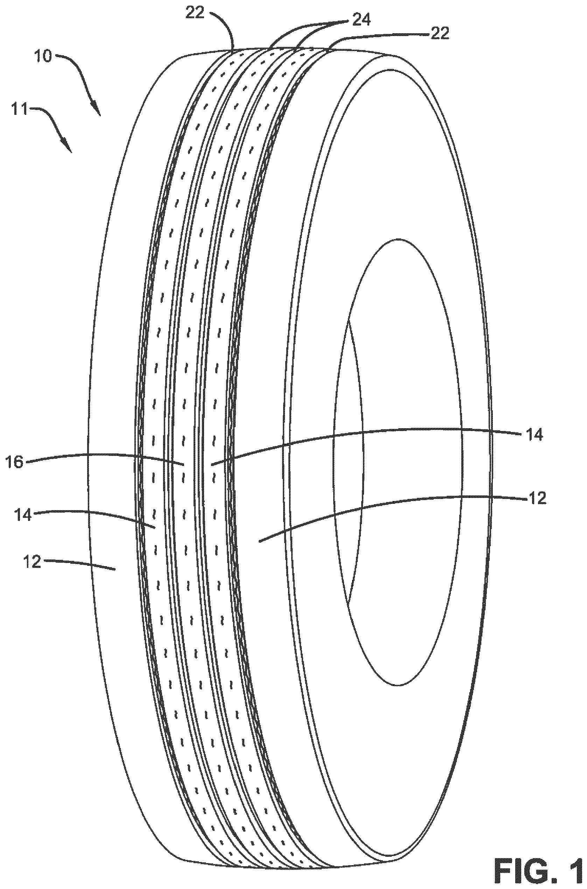

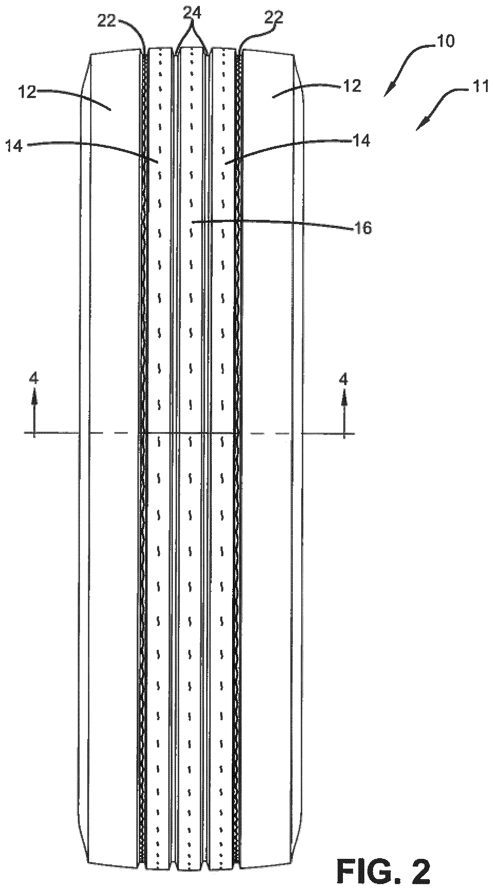

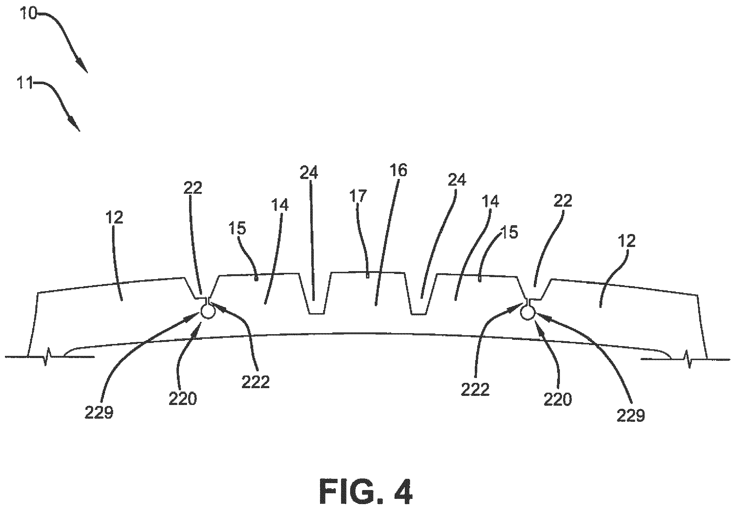

Referring now in more detail to the drawings, the present invention will below be described in more detail. The pneumatic, or non-pneumatic, tire 10 illustrated in FIGS. 1-5 as a preferred embodiment has a tread 11 defined by intermediate circumferential first shoulder ribs 12, intermediate circumferential second ribs 14, and a center intermediate circumferential third rib 16. The intermediate circumferential ribs 12, 14, 16 may be defined by two stabilizing circumferential grooves 22 and two central circumferential grooves 24. The two central circumferential grooves 24 may each have a trapezoidal cross-section with slanted walls and a flat bottom (FIG. 4). The intermediate circumferential second ribs 14 and the center intermediate circumferential third rib 16 may preferably have wavy blind sipes 15, 17, respectively, for improving performance of the tread 11.

The two stabilizing circumferential grooves 22 may also have a trapezoidal cross-section with slanted walls and a flat bottom, similar to the two central circumferential grooves 24. The radial depth of each stabilizing groove 22 may be more shallow (FIG. 4) or less (not shown) than the depth of the central circumferential grooves 24.

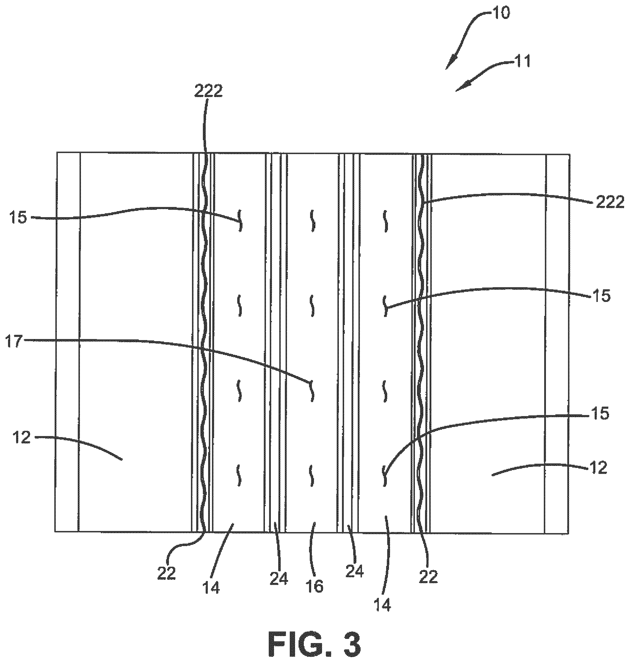

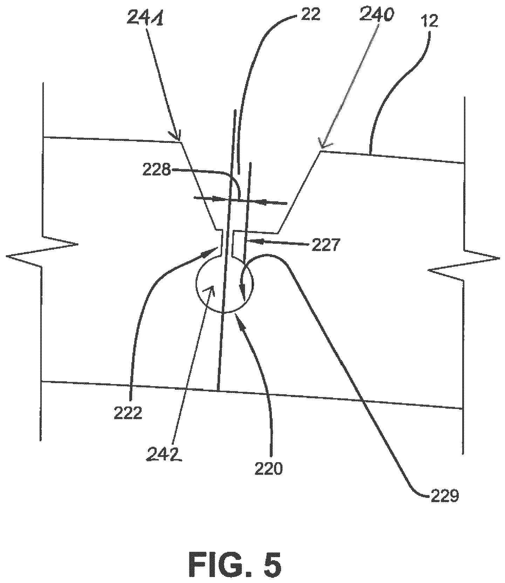

The stabilizing groove depths are preferably 40% to 60% such as 50% of the central groove depths (FIG. 4). At the flat bottom of each stabilizing groove 22 is a stabilizing structure 220. The stabilizing structures 220 may define circumferentially extending wavy subgrooves 222 of straight grooves (not shown) in the bottoms of the stabilizing grooves 22. As shown in FIG. 3, both the axial width of the subgrooves 222 and the axial width of the wave pattern are less than the axial width of the bottoms of the stabilizing grooves 22. The subgrooves 222 have curved, cylindrical radially innermost surfaces 229 to mitigate cracking and to increase axial flexibility of the stabilizing structures 220 (FIG. 5).

When an axially inward load is placed on the tread 11, such as while the vehicle is cornering, the axial width of the subgrooves 222 may shrink to as little as 0.0 mm (e.g., touching). Because of the wavy pattern of the subgrooves 222, the walls of the subgrooves may interlock thereby preventing relative circumferential movement between the walls of the subgrooves. This may provide an increase in stiffness of the tread 11 while cornering, without requiring increased overall stiffness of the tread during straight line movement of the vehicle.

In accordance with the present invention, the subgrooves 222 are axially offset a predetermined amount 228 from a centerline 227 of the grooves 22. The amount 228 of offset may be varied to tune the cornering stiffness of the tread 11. If a subgroove 222 is offset toward the center rib 16 (FIGS. 4-5), the tread 11 around that subgroove may have less cornering stiffness than a subgroove at the centerline 227 of the groove 22. Conversely, if a subgroove 222 is offset away from the center rib 16 (not shown), the tread 11 around that subgroove may have greater cornering stiffness than a subgroove at the centerline 227 of the groove 22. No matter the axial position relative to the centerline 227 of the groove 22, the stabilizing structure 220 may mitigate cracking and increase axial flexibility of the tread 11 during non-cornering, straight line motion and rotation of the tire 10.

In accordance with the invention, a tread 11 for a tire 10 is provided. The tread 11 comprises a circumferential groove 22 having a radially outermost and axially inner first groove edge 240 and a radially outermost and axially outer second groove edge 241. A centerline 227 or center plane of the circumferential groove 22 extends circumferentially along the circumferential groove 22 and axially in the middle between the first and second groove edge 240, 241. The circumferential groove 22 comprises a stabilizing structure 220 for increasing tread stiffness. The stabilizing structure 220 comprises a circumferentially extending subgroove 222 or slit in a radially innermost bottom of the circumferential groove 22. The subgroove 222 or slit is axially offset from the centerline 227 or center plane of the circumferential groove 22.

Preferably, the circumferential groove 22 has a maximal axial width and the maximum axial width of the subgroove 222 or slit is in a range of from 3 to 15 percent, preferably 5 to 10 percent, of the maximal axial width of the circumferential groove 22.

Preferably, the circumferential groove 22 has a maximal axial width and the subgroove 222 or slit is in a range of from 5 to 25 percent, preferably 10 to 20 percent, axially offset from the centerline 227 or center plane of the circumferential groove 22).

Preferably, the circumferential groove 22 has a maximal axial width and the subgroove 222 or slit is in a range of from 1 to 5 mm, preferably 2 to 4 mm, axially offset from the centerline 227 or center plane of the circumferential groove 22.

Preferably, the stabilizing structure 220 has the shape of a tie bar extending from one lateral wall of the circumferential groove 22 to another lateral groove wall of the circumferential groove 22 with said subgroove 222 or slit dividing said tie bar.

The subgroove 222 has a circumferentially extending curved cylindrical radially innermost surface 229, or the subgroove 222 or slit is connected radially downwards to a radially innermost, circumferentially extending structure 242 having a circular or ellipsoidal cross section. The cylindrical radially innermost surface 229 or the radially innermost, circumferentially extending structure 242 has an axial width in a range of from 20 to 60 percent, preferably 25 to 50 percent, of the maximal axial width of the circumferential groove 22.

In a preferred embodiment, the tread 11 has a first circumferential main groove, a second circumferential main groove, a third circumferential main groove and a fourth circumferential main groove, the fourth circumferential main groove being said a circumferential groove 22.

## Claims

1. A tread for a tire (10), the tread (11) comprising a circumferential groove (22) having a radially outermost and axially inner first groove edge (240) and a radially outermost and axially outer second groove edge (241), wherein a centerline (227) or center plane of the circumferential groove (22) extends circumferentially along the circumferential groove (22) and axially in the middle between the first and second groove edge (240, 241), the circumferential groove (22) comprising a stabilizing structure (220) for increasing tread stiffness, the stabilizing structure (220) comprising a circumferentially extending subgroove (222) or slit in a radially innermost bottom of the circumferential groove (22), and the subgroove (222) or slit being axially offset from the centerline (227) or center plane of the circumferential groove (22), and wherein the subgroove (222) has a circumferentially extending curved cylindrical radially innermost surface (229) or wherein the subgroove (222) or slit is connected radially downwards to a radially innermost, circumferentially extending structure (242) having a circular or ellipsoidal cross section, **characterized in that** the cylindrical radially innermost surface (229) or the radially innermost, circumferentially extending structure (242) has an axial width in a range of from 20 to 60 percent of the maximal axial width of the circumferential groove (22).

2. The tread of claim 1 wherein the circumferential groove (22) has a maximal axial width and wherein the maximum axial width of the subgroove (222) or slit is in a range of from 3 to 15 percent, preferably 5 to 10 percent, of the maximal axial width of the circumferential groove (22).

3. The tread of claim 1 or 2 wherein the circumferential groove (22) has a maximal axial width and wherein the subgroove (222) or slit is in a range of from 5 to 25 percent, preferably 10 to 20 percent, axially offset from the centerline (227) or center plane of the circumferential groove (22).

4. The tread of claim 1, 2 or 3 wherein the circumferential groove (22) has a maximal axial width and wherein the subgroove (222) or slit is in a range of from 1 to 5 mm, preferably 2 to 4 mm, axially offset from the centerline (227) or center plane of the circumferential groove (22).

5. The tread of at least one of the previous claims wherein the stabilizing structure (220) has the shape of a tie bar extending from one lateral wall of the circumferential groove (22) to another lateral groove wall of the circumferential groove (22) with said subgroove (222) or slit dividing said tie bar.

6. The tread of claim 1 wherein the cylindrical radially innermost surface (229) or the radially innermost, circumferentially extending structure (242) has an axial width in a range of from 25 to 50 percent of the maximal axial width of the circumferential groove (22).

7. The tread of at least one of the previous claims wherein the tread (11) has a first circumferential main groove, a second circumferential main groove, a third circumferential main groove and a fourth circumferential main groove, the fourth circumferential main groove being said a circumferential groove (22).

8. The tread of at least one of the previous claims wherein the axial width of the subgroove (222) or slit is such that it shrinks to 0.0 mm under a predetermined operating condition of the tread (11) when used on a tire (10).

9. The tread of at least one of the previous claims wherein the subgroove (222) has a first sidewall and a second sidewall interconnected by the curved, cylindrical radially innermost surface of the subgroove (222).

10. The tread of claim 9 wherein the subgroove (222) is configured such that the first sidewall abuts the second sidewall under the predetermined operating condition of the tread (11) when used on a tire (10).

11. The tread of claim 9 or 10 wherein the first sidewall has a wavy configuration and the second sidewall has a corresponding wavy configuration.

12. The tread of at least one of the previous claims wherein the tread (11) comprises a plurality of circumferential grooves (22) such as two, three, four or five of circumferential grooves (22), and wherein only one, only two, or all of said circumferential grooves comprise said stabilizing structure (220) comprising a circumferentially extending subgroove (222) or slit in a radially innermost bottom of the circumferential groove (22), the subgroove (222) or slit being axially offset from the centerline (227) or center plane of the circumferential groove (22).

13. The tread of at least one of the previous claims wherein the tread (11) comprises a plurality of circumferential grooves (22) such as two, three, four or five of circumferential grooves (22), and wherein:
(i) only the one axially outermost circumferential groove on either side of the equatorial plane of the tread (11) comprises said stabilizing structure (220) comprising a circumferentially extending subgroove (222) or slit in a radially innermost bottom of the circumferential groove (22), the subgroove (222) or slit being axially offset from the centerline (227) or center plane of the circumferential groove (22); or
(ii) only the one axially innermost circumferential groove on either side of the equatorial plane of the tread (11) comprises said stabilizing structure (220) comprising a circumferentially extending subgroove (222) or slit in a radially innermost bottom of the circumferential groove (22), the subgroove (222) or slit being axially offset from the centerline (227) or center plane of the circumferential groove (22); or
(iii) only the one circumferential groove that is located axially closest to the outboard side of the vehicle when the tread (11) is used on a vehicle in accordance with the tread's or tire's specification comprises said stabilizing structure (220) comprising a circumferentially extending subgroove (222) or slit in a radially innermost bottom of the circumferential groove (22), the subgroove (222) or slit being axially offset from the centerline (227) or center plane of the circumferential groove (22); or
(iv) only the one circumferential groove that is located axially closest to the inboard side of the vehicle when the tread (11) is used on a vehicle in accordance with the tread's or tire's specification comprises said stabilizing structure (220) comprising a circumferentially extending subgroove (222) or slit in a radially innermost bottom of the circumferential groove (22), the subgroove (222) or slit being axially offset from the centerline (227) or center plane of the circumferential groove (22).

14. A tire, preferably a pneumatic tire, having a tread in accordance with at least one of the previous claims.

## Patentansprüche

1. Lauffläche für einen Reifen (10), wobei die Lauffläche (11) eine Umfangsrille (22) umfasst, die einen radial äußersten und axial inneren ersten Rillenrand (240) und einen radial äußersten und axial äußeren zweiten Rillenrand (241) hat, wobei eine Mittellinie (227) oder Mittelebene der Umfangsrille (22) sich in Umlaufsrichtung entlang der Umfangsrille (22) und axial in der Mitte zwischen der ersten und zweiten Rillenrand (240, 241) erstreckt, wobei die Umfangsrille (22) eine zur Erhöhung der Laufflächensteifigkeit Stabilisierungsstruktur (220) umfasst, wobei die Stabilisierungsstruktur (220) eine oder einen sich in einem radial innersten Boden der Umfangsrille (22) in Umlaufsrichtung erstreckende Nebenrille (222) oder erstreckenden Schlitz umfasst, und die Nebenrille (222) oder der Schlitz axial zur Mittellinie (227) oder Mittelebene der Umfangsrille (22) versetzt ist, und wobei die Nebenrille (222) eine sich in Umlaufsrichtung erstreckende zylindrische radial innerste gebogene Fläche (229) hat oder wobei die Nebenrille (222) oder der Schlitz radial nach unten mit einer radial innersten sich in Umlaufsrichtung erstreckenden Struktur (242) verbunden ist, die einen kreisförmigen oder ellipsenförmigen Querschnitt hat, **dadurch gekennzeichnet, dass** die zylindrische radial innerste Oberfläche (229) oder die radial innerste, sich in Umlaufsrichtung ertreckende Struktur (242) eine axiale Breite in einem Bereich von 20 bis 60 Prozent der maximalen axialen Breite der Umfangsrille (22) hat.

2. Lauffläche nach Anspruch 1, wobei die Umfangsrille (22) eine maximale axiale Breite hat, und wobei die maximale axiale Breite der Nebenrille (222) oder des Schlitzes in einem Bereich von 3 bis 15 Prozent, vorzugsweise 5 bis 10 Prozent, der maximalen axialen Breite der Umfangsrille (22) liegt.

3. Lauffläche nach Anspruch 1 oder 2, wobei die Umfangsrille (22) eine maximale axiale Breite hat, und wobei die Nebenrille (222) oder der Schlitz in einem Bereich von 5 bis 25 Prozent, vorzugsweise 10 bis 20 Prozent, axial von der Mittellinie (227) oder der Mittelebene der in Umlaufsrichtungen Nut (22) versetzt ist.

4. Lauffläche nach Anspruch 1, 2 oder 3, wobei die Umfangsrille (22) eine maximale axiale Breite hat, und wobei die Nebenrille (222) oder der Schlitz in einem Bereich von 1 bis 5 mm, vorzugsweise 2 bis 4 mm, axial von der Mittellinie (227) oder der Mitte der Umfangsrille (22) versetzt ist.

5. Lauffläche nach mindestens einem der vorhergehenden Ansprüche, wobei die Stabilisierungsstruktur (220) die Form eines Profilstegs hat, der sich von einer Rillenseitenwand der Umfangsrille (22) zu einer anderen Rillenseitenwand der Umfangsrille (22) erstreckt, wobei die Nebenrille (222) oder der Schlitz diesen Profilsteg teilt.

6. Lauffläche nach Anspruch 1, wobei die zylindrische radial innerste Oberfläche (229) oder die radial innerste, sich in Umlaufsrichtung erstreckende Struktur (242) eine axiale Breite in einem Bereich von 25 bis 50 Prozent der maximalen axialen Breite der Umfangsrille (22) hat.

7. Lauffläche nach mindestens einem der vorhergehenden Ansprüche, wobei die Lauffläche (11) eine erste Umfangshauptrille, eine zweite Umfangshauptrille, eine dritte Umfangshauptrille und eine vierte Umfangshauptrille hat, wobei die vierte Umfangshauptrille die eine Umfangsrille (22) ist.

8. Lauffläche nach mindestens einem der vorhergehenden Ansprüche, wobei die axiale Breite der Nebenrille (222) oder des Schlitzes so ist, dass sie in einem vorbestimmten Betriebszustand der Lauffläche (11) bei Verwendung auf einem Reifen (10) auf 0,0 mm schrumpft.

9. Lauffläche nach mindestens einem der vorhergehenden Ansprüche, wobei die Nebenrille (222) eine erste Seitenwand und eine zweite Seitenwand hat, die durch die gebogene, zylindrische radial innerste Oberfläche der Nebenrille (222) miteinander verbunden sind.

10. Lauffläche nach Anspruch 9, wobei die Nebenrille (222) derart ausgebildet ist, dass die erste Seitenwand in dem vorbestimmten Betriebszustand der Lauffläche (11) bei Verwendung auf einem Reifen (10) an der zweiten Seitenwand anliegt.

11. Lauffläche nach Anspruch 9 oder 10, wobei die erste Seitenwand eine wellenförmige Konfiguration hat, und die zweite Seitenwand eine entsprechende wellenförmige Konfiguration hat.

12. Lauffläche nach mindestens einem der vorhergehenden Ansprüche, wobei die Lauffläche (11) eine Anzahl von Umfangsrillen (22), wie zwei, drei, vier oder fünf von den Umfangsrillen (22) umfasst, und wobei nur eine, nur zwei oder alle dieser Umfangsrillen die Stabilisierungsstruktur (220) umfasst oder umfassen, wobei die Stabilisierungsstruktur (220) eine oder einen sich, in einem radial innersten Boden der Umfangsrille (22), in Umlaufsrichtung erstreckende Nebenrille (222) oder erstreckenden Schlitz umfasst, und die Nebenrille (222) oder der Schlitz axial zur Mittellinie (227) oder Mittelebene der Umfangsrille (22) versetzt ist.

13. Lauffläche nach mindestens einem der vorhergehenden Ansprüche, wobei die Lauffläche (11) eine Anzahl von Umfangsrillen (22), wie zwei, drei, vier oder fünf Umfangsrillen (22) umfasst, und wobei:
(i) nur die eine axial äußerste Umfangsrille auf beiden Seiten der äquatorialen Ebene der Lauffläche (11) diese Stabilisierungsstruktur (220) umfasst, wobei diese eine oder einen sich in einem radial innersten Boden der Umfangsrille (22) in Umlaufsrichtung erstreckende Nebenrille (222) oder erstreckenden Schlitz umfasst und die Nebenrille (222) oder der Schlitz axial zur Mittellinie (227) oder Mittelebene der Umfangsrille (22) versetzt ist; oder
(ii) nur die eine axial innerste Umfangsrille auf beiden Seiten der äquatorialen Ebene der Lauffläche (11) diese Stabilisierungsstruktur (220) umfasst, wobei diese eine oder einen sich in einem radial innersten Boden der Umfangsrille (22) in Umlaufsrichtung erstreckende Nebenrille (222) oder erstreckenden Schlitz umfasst und die Nebenrille (222) oder der Schlitz axial zur Mittellinie (227) oder Mittelebene der Umfangsrille (22) versetzt ist; oder
(iii) nur die eine Umfangsrille, die sich beim Einsatz der Lauffläche (11) an einem Fahrzeug gemäß Lauffläche- oder Reifenspezifikation axial am nächsten der Außenseite des Fahrzeugs befindet, diese Stabilisierungsstruktur (220) umfasst, wobei diese eine oder einen sich in einem radial innersten Boden der Umfangsrille (22) in Umlaufsrichtung erstreckende Nebenrille (222) oder erstreckenden Schlitz umfasst und die Nebenrille (222) oder der Schlitz axial zur Mittellinie (227) oder Mittelebene der Umfangsrille (22) versetzt ist; oder
(iv) nur die eine Umfangsrille, die sich beim Einsatz der Lauffläche (11) an einem Fahrzeug gemäß Lauffläche- oder Reifenspezifikation axial am nächsten der Innenseite des Fahrzeugs befindet, diese Stabilisierungsstruktur (220) umfasst, wobei diese eine oder einen sich in einem radial innersten Boden der Umfangsrille (22) in Umlaufsrichtung erstreckende Nebenrille (222) oder erstreckenden Schlitz umfasst und die Nebenrille (222) oder der Schlitz axial zur Mittellinie (227) oder Mittelebene der Umfangsrille (22) versetzt ist.

14. Reifen, vorzugsweise Luftreifen, der eine Lauffläche gemäß mindestens einem der vorhergehenden Ansprüche hat.

## Revendications

1. Bande de roulement pour un bandage (10) qui comprend une rainure circonférentielle (22) qui possède un premier bord de rainure (22) le plus externe dans la direction radiale et interne dans la direction axiale et un deuxième bord de rainure (241) le plus externe dans la direction radiale et externe dans la direction axiale ; dans lequel une ligne médiane (227) ou un plan central de la rainure circonférentielle (22) s'étend dans la direction circonférentielle le long de la rainure circonférentielle (22) et dans la direction axiale au milieu entre le premier et le deuxième bord de rainure (240, 241), la rainure circonférentielle (22) comprenant une structure de stabilisation (220) destinée à augmenter la rigidité de la bande de roulement, la structure de stabilisation (220) comprenant une rainure ou une fente secondaire (222) qui s'étend dans la direction circonférentielle dans une base la plus interne dans la direction radiale de la rainure circonférentielle (22), et la rainure ou la fente secondaire (222) étant décalée dans la direction axiale par rapport à la ligne médiane (227) ou au plan central de la rainure circonférentielle (22) ; et dans laquelle la rainure secondaire (222) possède une surface cylindrique courbe (229) la plus interne dans la direction radiale, qui s'étend dans la direction circonférentielle ; ou dans laquelle la rainure ou la fente secondaire (222) est reliée dans la direction radiale vers le bas à une structure (242) la plus interne dans la direction radiale, s'étendant dans la direction circonférentielle, qui possède une section transversale circulaire ou ellipsoïde, **caractérisée en ce que** la surface cylindrique (229) la plus interne dans la direction radiale ou la structure (242) la plus interne dans la direction radiale, qui s'étend dans la direction circonférentielle, possède une largeur axiale qui se situe dans une plage allant de 20 à 60 % de la largeur axiale maximale de la rainure circonférentielle (22).

2. Bande de roulement selon la revendication 1, dans laquelle la rainure circonférentielle (22) possède une largeur axiale maximale ; et dans laquelle la largeur axiale maximale de la rainure ou de la fente secondaire (222) se situe dans une plage allant de 3 à 15 pour cent, de préférence de 5 à 10 pour cent, de la largeur axiale maximale de la rainure circonférentielle (22).

3. Bande de roulement selon la revendication 1 ou 2, dans laquelle la rainure circonférentielle (22) possède une largeur axiale maximale ; et dans laquelle la rainure ou de la fente secondaire (222) présente un décalage, dans la direction axiale, par rapport à la ligne médiane (227) ou au plan central de la rainure circonférentielle (22), qui se situe dans une plage allant de 5 à 25 pour cent, de préférence de 10 à 20 pour cent.

4. Bande de roulement selon la revendication 1, 2 ou 3, dans laquelle la rainure circonférentielle (22) possède une largeur axiale maximale ; et dans laquelle la rainure ou de la fente secondaire (222) présente un décalage, dans la direction axiale, par rapport à la ligne médiane (227) ou au plan central de la rainure circonférentielle (22), qui se situe dans une plage allant de 1 à 5 mm, de préférence de 2 à 4 mm.

5. Bande de roulement selon au moins une des revendications précédentes, dans laquelle la structure de stabilisation (220) possède la configuration d'un pont de gomme qui s'étend à partir d'une paroi latérale de la rainure circonférentielle (22) jusqu'à une autre paroi de rainure latérale de la rainure circonférentielle (22), ladite rainure ou ladite fente secondaire (222) divisant ledit pont de gomme.

6. Bande de roulement selon la revendication 1, dans laquelle la surface cylindrique (229) la plus interne dans la direction radiale ou la structure (242) la plus interne dans la direction radiale qui s'étend dans la direction circonférentielle possède une largeur axiale qui se situe dans une plage allant de 25 à 50 pour cent de la largeur axiale maximale de la rainure circonférentielle (22).

7. Bande de roulement selon au moins une des revendications précédentes, dans laquelle la bande de roulement (11) possède une première rainure circonférentielle principale, une deuxième rainure circonférentielle principale, une troisième rainure circonférentielle principale et une quatrième rainure circonférentielle principale, la quatrième rainure circonférentielle principale représentant ladite une rainure circonférentielle (22).

8. Bande de roulement selon au moins une des revendications précédentes, dans laquelle la largeur axiale de la rainure ou de la fente secondaire (222) est telle qu'elle subit un rétrécissement jusqu'à 0,0 mm dans une condition de travail prédéterminée de la bande de roulement (11 lorsqu'on utilise cette dernière sur un bandage (10).

9. Bande de roulement selon au moins une des revendications précédentes, dans laquelle la rainure secondaire (222) possède un premier flanc et un deuxième flanc qui sont reliés l'une à l'autre par la surface cylindrique courbe la plus interne dans la direction radiale, de la rainure secondaire (222).

10. Bande de roulement selon la revendication 9, dans laquelle la rainure secondaire (222) est configurée d'une manière telle que le premier flanc vient buter contre le deuxième flanc dans la condition de travail prédéterminée de la bande de roulement (11) lorsqu'on utilise cette dernière sur un bandage (10).

11. Bande de roulement selon la revendication 9 ou 10, dans laquelle le premier flanc possède une configuration ondulée et le deuxième flanc possède une configuration ondulée correspondante.

12. Bande de roulement selon au moins une des revendications précédentes, dans laquelle la bande de roulement (11) comprend un certain nombre de rainures circonférentielles (22), tel que deux, trois, quatre ou cinq de ces rainures circonférentielles (22) ; et dans laquelle seulement une, seulement deux, ou la totalité desdites rainures circonférentielles comprend/comprennent ladite structure de stabilisation (220) qui comprend une rainure ou une fente secondaire (222) qui s'étend dans la direction circonférentielle dans la direction circonférentielle dans une base la plus interne dans la direction radiale de la rainure circonférentielle (22), la rainure ou la fente secondaire (222) étant décalée dans la direction axiale par rapport à la ligne médiane (227) ou au plan central de la rainure circonférentielle (22).

13. Bande de roulement selon au moins une des revendications précédentes, dans laquelle la bande de roulement (11) comprend un certain nombre de rainures circonférentielles (22), tel que deux, trois, quatre ou cinq de ces rainures circonférentielles (22) ; et dans laquelle :
(i) seule ladite une rainure circonférentielle la plus externe dans la direction axiale, de part et d'autre du plan équatorial de la bande de roulement (11) comprend ladite structure de stabilisation (220) qui comprend une rainure ou une fente secondaire (222) qui s'étend dans la direction circonférentielle dans une base la plus interne dans la direction radiale de la rainure circonférentielle (22), la rainure ou la fente secondaire (222) étant décalée dans la direction axiale par rapport à la ligne médiane (227) ou au plan central de la rainure circonférentielle (22) ; ou
(ii) seule ladite une rainure circonférentielle la plus interne dans la direction axiale, de part et d'autre du plan équatorial de la bande de roulement (11) comprend ladite structure de stabilisation (220) qui comprend une rainure ou une fente secondaire (222) qui s'étend dans la direction circonférentielle dans une base la plus interne dans la direction radiale de la rainure circonférentielle (22), la rainure ou la fente secondaire (222) étant décalée dans la direction axiale par rapport à la ligne médiane (227) ou au plan central de la rainure circonférentielle (22) ; ou
(iii) seule ladite rainure circonférentielle qui est disposée le plus près, dans la direction axiale, du côté externe du véhicule lorsque la bande de roulement (11) est utilisée sur un véhicule en conformité avec la spécification de la bande de roulement ou du bandage, comprend ladite structure de stabilisation (220) qui comprend une rainure ou une fente secondaire (222) qui s'étend dans la direction circonférentielle dans une base la plus interne dans la direction radiale de la rainure circonférentielle (22), la rainure ou la fente secondaire (222) étant décalée dans la direction axiale par rapport à la ligne médiane (227) ou au plan central de la rainure circonférentielle (22) ; ou
(iv) seule ladite rainure circonférentielle qui est disposée le plus près, dans la direction axiale, du côté interne du véhicule lorsque la bande de roulement (11) est utilisée sur un véhicule en conformité avec la spécification de la bande de roulement ou du bandage, comprend ladite structure de stabilisation (220) qui comprend une rainure ou une fente secondaire (222) qui s'étend dans la direction circonférentielle dans une base la plus interne dans la direction radiale de la rainure circonférentielle (22), la rainure ou la fente secondaire (222) étant décalée dans la direction axiale par rapport à la ligne médiane (227) ou au plan central de la rainure circonférentielle (22).

14. Bandage, de préférence bandage pneumatique qui possède une bande de roulement en conformité avec au moins une des revendications précédentes.
